# EUROPÄISCHE PATENTANMELDUNG

(11) **EP 1 245 869 A2**
(43) Veröffentlichungstag der Anmeldung: **02.10.2002**
(21) Anmeldenummer: 02005815.2
(22) Anmeldetag: 14.03.2002
(51) Int. Cl.: F16H 55/14

(54) **Zahnrad**

(30) Priorität: 31.03.2001 DE 10116236
(71) Anmelder: Carl Freudenberg KG, 69469 Weinheim (DE)
(72) Erfinder: Heldmann, Ralf, 69483 Wald-Michelbach (DE)

(57) **Zusammenfassung**

Zahnrad, umfassend ein Innenteil (1) und ein ringförmiges, außenumfangsseitig mit Zähnen (2) versehenes Außenteil (3), wobei das Außenteil (3) das Innenteil (1) mit radialem Abstand außenumfangsseitig umschließt und wobei in dem durch den Abstand gebildeten Spalt (4) zumindest ein Federkörper (5) aus elastomerem Werkstoff angeordnet ist.

## Beschreibung

Die Erfindung betrifft ein Zahnrad.

### Stand der Technik

Zahnräder sind allgemein bekannt und gelangen zur Übertragung von Kräften zur Anwendung. Während der bestimmungsgemäßen Verwendung von Zahnrädern, die miteinander im Eingriff sind, entstehen unerwünschte Geräusche. Zur Reduzierung von Geräuschen ist aus der DE 44 26 325 A1 eine Anti-Klapper-Vorrichtung für ein Paar von miteinander kämmenden Zahnrädern beschrieben und gezeigt, bei dem eine Beschichtung eines elastomeren Materials auf einem der Zahnräder mit Zähnen des anderen Zahnrads in Kontakt steht, wobei die Beschichtung derart radial um das Zahnrad angeordnet ist, dass der Außendurchmesser der Beschichtung größer als der Fußkreisdurchmesser des damit versehenen Zahnrads ist.

### Darstellung der Erfindung

Der Erfindung liegt die Aufgabe zugrunde, ein Zahnrad derart weiterzuentwickeln, dass während seiner bestimmungsgemäßen Verwendung die Schallabstrahlung in die Umgebung minimiert ist, dass die Minimierung der Schallabstrahlung während der gesamten Gebrauchsdauer des Zahnrads von gleichbleibender Güte ist und dass das Zahnrad eine hohe Lebensdauer bei gleichbleibend guten Gebrauchseigenschaften aufweist.

Diese Aufgabe wird erfindungsgemäß bei einem Zahnrad mit den Merkmalen von Anspruch 1 gelöst. Auf vorteilhafte Ausgestaltungen nehmen die Unteransprüche Bezug.

Zur Lösung der Aufgabe ist ein Zahnrad vorgesehen, umfassend ein Innenteil und ein ringförmiges, außenumfangsseitig mit Zähnen versehenes Außenteil, wobei das Außenteil das Innenteil mit radialem Abstand außenumfangsseitig umschließt und wobei in dem durch den Abstand gebildeten Spalt zumindest ein Federkörper aus elastomerem Werkstoff angeordnet ist. Die wesentlich verringerte Schallabstrahlung gegenüber herkömmlichen, einteilig ausgebildeten Zahnrädern ist auf die schwingungstechnische Entkopplung von Innenteil und Außenteil mittels des Federkörpers zurückzuführen; Schallbrücken durch eine unmittelbare Berührung von Innenteil und Außenteil bestehen bei dem erfindungsgemäßen Zahnrad nicht.

In Abhängigkeit von den jeweiligen Gegebenheiten des Anwendungsfalls können die Werkstoffe von Innenteil und Außenteil übereinstimmend oder voneinander abweichend sein. Durch die Anordnung des Federkörpers in radialer Richtung zwischen dem Innenteil und dem Außenteil und dadurch, dass die Zähne des Zahnrads ausschließlich aus einem Zahnrad-Werkstoff bestehen und nicht beispielsweise, zur Erzielung eines ruhigeren Laufs, zumindest teilweise mit einer Beschichtung aus elastomerem Werkstoff versehen sind, weist das erfindungsgemäße Zahnrad eine lange Gebrauchsdauer mit gleichbleibend guten Gebrauchseigenschaften auf. Diese Vorteile bleiben auch dann bestehen, wenn die Zahnräder, beispielsweise durch hohe zu übertragende Kräfte mechanisch hoch belastet sind.

Der Federkörper kann den Außenumfang des Innenteils und den Innenumfang des Außenteils unmittelbar anliegend berühren. Hierbei ist von Vorteil, dass das Zahnrad einen teilearmen, nur aus drei Teilen, nämlich dem Innenteil, dem Außenteil und dem Federkörper bestehenden Aufbau aufweist und dadurch einfach und kostengünstig herstellbar ist.
Generell besteht die Möglichkeit, dass der Federkörper adhäsiv zwischen dem Innenteil und dem Außenteil angeordnet ist. Der Federkörper kann beispielsweise zwischen dem Innenteil und dem Außenteil vulkanisiert sein. Ein anderes Herstellungsverfahren kann darin bestehen, dass der Federkörper als Fertigteil in den Spalt zwischen Innenteil und Außenteil eingeschossen wird. In jedem Fall ist der Federkörper unter einer Druck-Vorspannung innerhalb des Spalts angeordnet. Dadurch werden gebrauchsdauerverringernde Zugspannungen innerhalb des Federkörpers während der bestimmungsgemäßen Verwendung vermieden.

Der Federkörper ist ringförmig ausgebildet. Für Anwendungsfälle, in denen die zu übertragenden Kräfte vergleichsweise gering sind, ist der Federkörper bevorzugt kreisringförmig ausgebildet. Das Innenteil wird in einem solchen Fall durch eine Scheibe gebildet mit einem kreisförmigen Außenumfang, der von einem kreisförmigen Innenumfang des Außenteils mit radialem Abstand konzentrisch umschlossen ist. Durch die einfache Herstellung von Innenteil und Außenteil ist das gesamte Zahnrad ebenfalls einfach und kostengünstig herstellbar.

Für Anwendungsfälle, in denen die zu übertragenden Kräfte größer sind und dadurch die Gefahr besteht, dass der Federkörper durch eine unerwünscht hohe Scherspannung beschädigt und/oder zerstört wird, kann der Federkörper im Wesentlichen wellenförmig, in Umfangsrichtung in sich geschlossen ausgebildet sein. Durch die wellenförmige Gestalt des Federkörpers sind auch die dem Federkörper zugewandten Oberflächen von Innenteil und Außenteil kongruent zur jeweils benachbarten Oberfläche des Federkörpers ausgebildet, so dass der Federkörper im Bereich zwischen einander in Umfangsrichtung benachbart angeordneten Wellen von Innenteil und Außenteil Druckspannungen ausgesetzt ist, die elastomere Werkstoffe ohne Beschädigung und/oder Zerstörung gut vertragen.

Das Innenteil kann gleichmäßig in Umfangsrichtung verteilte, radial nach außen weisende erste Vorsprünge aufweisen, wobei das Außenteil gleichmäßig in Umfangsrichtung verteilte, radial nach innen weisende zweite Vorsprünge aufweist, wobei die Anzahl der ersten Vorsprünge der Anzahl der zweiten Vorsprünge entspricht und wobei die ersten und zweiten Vorsprünge einander in radialer Richtung überdecken. Zusätzlich zu der zuvor beschriebenen vorteilhaften Druckspannung innerhalb des Federkörpers ist von Vorteil, dass ein solches Zahnrad gute Notlaufeigenschaften aufweist, für den Fall, dass der Federkörper beschädigt und/oder zerstört wird. Auch bei beschädigtem und/oder zerstörtem Federkörper ist die Kraftübertragung zwischen dem Innenteil und dem Außenteil nicht unterbrochen, da sich durch die Überdeckung der Vorsprünge in radialer Richtung die Vorsprünge aneinander abstützen und dadurch die Kraftübertragung auch dann gewährleistet bleibt.

### Kurzbeschreibung der Zeichnung

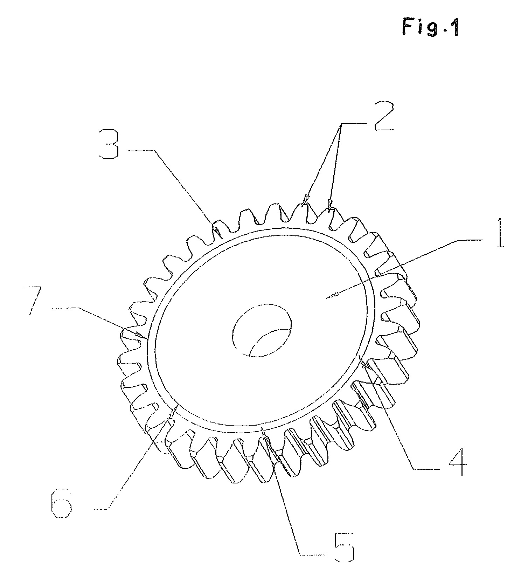

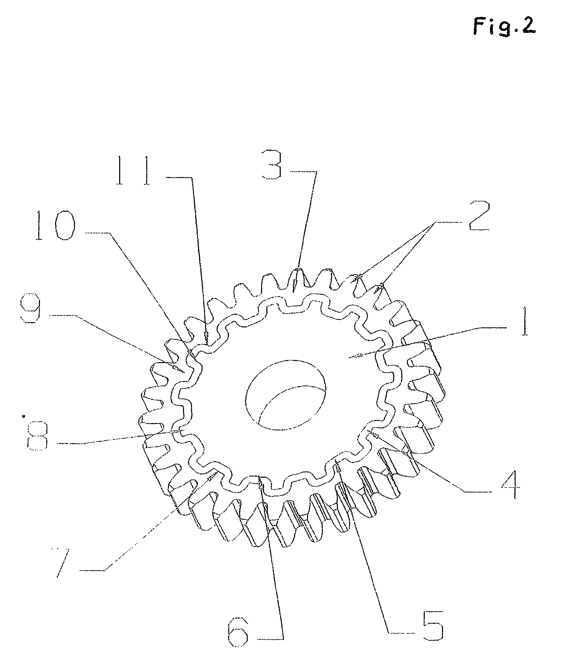

Zwei Ausführungsbeispiele des erfindungsgemäßen Zahnrads werden nachfolgend anhand der Figuren 1 und 2 näher beschrieben.
Diese zeigen jeweils in schematischer Darstellung:
- Figur 1: Ein erstes Ausführungsbeispiel, bei dem der Federkörper im Wesentlichen kreisringförmig ausgebildet ist,
- Figur 2: ein zweites Ausführungsbeispiel mit einem in Umfangsrichtung im Wesentlichen wellenförmig ausgebildeten Federkörper.

### Ausführung der Erfindung

In den Figuren 1 und 2 ist jeweils ein Ausführungsbeispiel eines Zahnrads in perspektivischer Darstellung gezeigt. Jedes der Zahnräder umfasst ein Innenteil 1 und ein ringförmiges, außenumfangsseitig mit Zähnen 2 versehenes Außenteil 3, wobei das Innenteil 1 und das Außenteil 2 schwingungsentkoppelt miteinander verbunden sind. Das Außenteil 3 umschließt das Innenteil 1 mit radialem Abstand außenumfangsseitig, wobei in dem durch den Abstand gebildeten Spalt 4 der Federkörper 5 angeordnet ist, der aus einem elastomeren Werkstoff besteht.

Der elastomere Werkstoff des Federkörpers 5 ist an die zu übertragenden Kräfte des Zahnrads angepasst.

Das Innenteil 1 besteht in diesem Ausführungsbeispiel aus einem metallischen Werkstoff. Statt eines Innenteils 1 aus dem zuvor genannten Werkstoff besteht beispielsweise auch die Möglichkeit, einen polymeren Werkstoff vorzusehen, wodurch während der bestimmungsgemäßen Verwendung des Zahnrads die Schallabstrahlung in die Umgebung weiter reduziert werden kann.

In Figur 1 ist der Federkörper 5 kreisringförmig ausgebildet und berührt, ebenso wie im Ausführungsbeispiel aus Figur 2, den Außenumfang 6 des Innenteils 1 und den Innenumfang 7 des Außenteils 3 unmittelbar anliegend. Das Zahnrad aus Figur 1 ist durch die einfache Geometrie von Innenteil 1, Außenteil 3 und Federkörper 5 einfach und kostengünstig herstellbar.

In Figur 2 ist ein zweites Ausführungsbeispiel eines Zahnrads gezeigt, mit dem im Vergleich zum Ausführungsbeispiel aus Figur 1 vergleichsweise höhere Kräfte übertragbar sind. Dazu ist der Federkörper 5 im Wesentlichen wellenförmig ausgebildet, wobei das Innenteil 1 gleichmäßig in Umfangsrichtung verteilte, radial nach außen weisende erste Vorsprünge 8 aufweist und das Außenteil 3 gleichmäßig in Umfangsrichtung verteilte, radial nach innen weisende zweite Vorsprünge 9. Die Anzahl der ersten Vorsprünge 8 und die Anzahl der zweiten Vorsprünge 9 ist gleich, wobei sich die ersten 8 und zweiten Vorsprünge 9 einander in radialer Richtung überdecken. Zur Kraftübertragung stützen sich die einander zugewandten, umfangsseitigen Flanken 10, 11 der Vorsprünge 8, 9 von Innenteil 1 und Außenteil 3 in Umfangsrichtung mittels des dazwischen angeordneten elastomeren Werkstoffs des Federkörpers 5 aufeinander ab. Der elastomere Werkstoff ist in diesem Bereich nur einer Druck-Vorspannung ausgesetzt.

Der entscheidende Vorteil des erfindungsgemäßen Zahnrads ist darin zu sehen, dass durch die Anordnung des Federkörpers 5 zwischen Innenteil 1 und Außenteil 3 während des Gebrauchs des Zahnrads nur wenig Geräusche entstehen und trotzdem die miteinander kämmenden Zähne der Zahnräder ausschließlich aus Zahnrad-Werkstoff bestehen und dadurch gleichbleibend gute Gebrauchseigenschaften während einer langen Gebrauchsdauer aufweisen.

Innenteil 1 und Außenteil 3 sind durch den Federkörper 5 schwingungstechnisch vollständig voneinander entkoppelt.

Dadurch, dass die Zahngeometrie durch die Anti-Geräuscheinrichtung in Form des Federkörpers 5 nicht beeinflusst/verändert wird, ist das erfindungsgemäße Zahnrad gleichermaßen gut für geradverzahnte oder schrägverzahnte Zahnräder geeignet.

Besonders geeignet sind die erfindungsgemäßen Zahnräder als Stirnräder zum Antrieb von Wasser- oder Ölpumpen oder im Ventiltrieb von Kraftfahrzeugen.

### Bezugszeichenliste zu 01PA0020/DE

- 1: Innenteil
- 2: Zähne
- 3: Außenteil
- 4: Spalt
- 5: Federkörper
- 6: Außenumfang des Innenteils
- 7: Innenumfang des Außenteils
- 8: Erster Vorsprung des Innenteils
- 9: Zweiter Vorsprung des Außenteils
- 10: Flanke eines Zahns des Innenteils
- 11: Flanke eines Zahns des Außenteils

## Patentansprüche

1. Zahnrad, umfassend ein Innenteil (1) und ein ringförmiges, außenumfangsseitig mit Zähnen (2) versehenes Außenteil (3), wobei das Außenteil (3) das Innenteil (1) mit radialem Abstand außenumfangsseitig umschließt und wobei in dem durch den Abstand gebildeten Spalt (4) zumindest ein Federkörper (5) aus elastomerem Werkstoff angeordnet ist.

2. Zahnrad nach Anspruch 1, **dadurch gekennzeichnet, dass** der Federkörper (5) den Außenumfang (6) des Innenteils (1) und den Innenumfang (7) des Außenteils (3) unmittelbar anliegend berührt.

3. Zahnrad nach einem der Ansprüche 1 oder 2, **dadurch gekennzeichnet, dass** der Federkörper (5) ringförmig ausgebildet ist.

4. Zahnrad nach einem der Ansprüche 1 bis 3, **dadurch gekennzeichnet, dass** der Federkörper (5) im Wesentlichen wellenförmig, in Umfangsrichtung in sich geschlossen, ausgebildet ist.

5. Zahnrad nach Anspruch 4, **dadurch gekennzeichnet, dass** das Innenteil (1) gleichmäßig in Umfangsrichtung verteilte, radial nach außen weisende erste Vorsprünge (8) aufweist, dass das Außenteil (3) gleichmäßig in Umfangsrichtung verteilte, radial nach innen weisende zweite Vorsprünge (9) aufweist, dass die Anzahl der ersten Vorsprünge (8) der Anzahl der zweiten Vorsprünge (9) entspricht und dass die ersten (8) und zweiten Vorsprünge (9) einander in radialer Richtung überdecken.
